# EUROPEAN PATENT APPLICATION

(11) **EP 2 034 430 A1**
(43) Date of publication of application: **11.03.2009**
(21) Application number: 08015655.7
(22) Date of filing: 04.09.2008
(51) Int. Cl.: G06Q 10/00

(54) **Centralized production management for measuring mail industry processing performance**

(30) Priority: 07.09.2007 US 970700 P; 27.12.2007 US 5417
(71) Applicant: Bowe Bell & Howell Company, Durham NC 27713-1803 (US)
(72) Inventor: Spitzig, Roger, St. Clements Ontario N0B 2M0 (CA); Maselli, Michael, J., Cary NC 27519 (US); Richards, Bob, Kitchener Ontario N2R 1M5 (CA); Tolomei, Victor, Raleigh NC 27606 (US); Mackelprang, Mark, G., Cary NC 27511 (US); Murray, Alexander, Waterloo Ontario N2L 5A1 (CA); Moreau, Eric, Waterloo Ontario N2K 4L5 (CA)
(74) Representative: Zimmermann, Tankred Klaus

(57) **Abstract**

In the disclosed example, an Intelligence Management System (IMS) collects data pertaining to operations of resources of various document processing environments operated by different entities into a database. The IMS processes data from the database according to criteria, to generate at least one anonymous performance metric representing operational performance of resources within a number of the document processing environments. The anonymous metric may be presented to a user, such as personnel of one of the operating entities. If the user has sufficient access privileges, the IMS may also generate a similar client specific metric from data for one or more environments with which the user is associated, for example, to allow benchmark comparison of the operational performance of the associated environment(s) against the anonymous performance metric.

## Description

### Related Applications

This application claims the benefit of U.S. Provisional Application No. 60/970,700 Filed September 7, 2007 entitled "Centralized Production Management for Measuring Mail Industry Processing Performance," the disclosure of which also is entirely incorporated herein by reference.

### Technical Field

The subject matter presented herein relates to methods, apparatuses and program products for storing and subsequently anonymously sharing data representative of the operations and performance of resources employed within a plurality of independent document processing environments.

### Background

Document processing facilities are a vital part of any major enterprise for ensuring effective mail based communication between the enterprise and its external and internal constituencies. An enterprise may operate its own document processing facilities or rely on another entity to provide document processing of various types to the enterprise as contracted services. Typically, document processing facilities employ a multitude of processes, people and/or processing devices and systems-collectively referred to as resources-for processing the often massive quantities of letters, packages, envelopes, coupon booklets, brochures, post cards, and other mail items intended for distribution via a mail distribution network (e.g., the United States Postal Service (USPS)) or similar items received from the mail distribution network for distribution and/or other processing within the enterprise. The types of machine resources found within a typical document processing facility may vary from one facility to the next, but may generally include sorters for sorting mail items according to a sort scheme, inserters, cutters, printers and folders for generating, assembling, arranging and organizing mail items, mail bins for accumulating the multitude of mail items processed in preparation for distribution, etc. In addition, a multitude of computing resources may be interconnected with the various machines within the facility to ensure proper operation and connectivity of the devices (e.g., connectivity to an application server capable of executing software associated with the device). Furthermore, each of these devices or computing resources may be supported and/or used by one or more device operators/users who execute tasks in connection with one or more customers, projects or procedures. Suffice to say, this plurality of devices, people, customers, computers, and other interactive resources-operating independently or in conjunction with each other-must work effectively in order to ensure optimal operation of the document processing environment.

Unfortunately, as no two document processing environments are alike, there currently is no means of effectively benchmarking document processing performance relative to a number of individual document processing environments existent today. Likewise, within the document processing industry, there is no effective means of conveying real-time data representative of the various operational, procedural, system or human resources that impact the efficiency of independent document processing environments. As a result, though an entity operating a particular document processing environment may invest much capital and time in optimizing the resources and infrastructure of its own document processing environment, the enterprise is still limited in its awareness of its performance relative to other document processing operations. Very little business intelligence, strategic planning, or competitive analysis as it relates to the overall document processing industry and marketplace may be generated, given the present limited access to vital external performance or operations data. While the stagnating impact of such limited intelligence upon the document processing industry is rather obvious, this limitation also impedes the overall effectiveness of the underlying postal authority. Increases in productivity, efficiency, throughput and other key performance measures relative to document processing facilities directly or indirectly impacts the postal authority responsible for distribution of mail items.

For this reason, a need has arisen to increase the capacity of independent document processing environments to seamlessly exchange relevant data pertaining to the various operational, procedural, system or human resources that impact their ultimate efficiency and effectiveness. Moreover, a need has arisen to enable this data (i.e., operations and performance data) to be leveraged and converted into useful metrics, benchmarks, analytics, scorecards and other forms of intelligence and/or recommendations useful for furthering document processing efficiency. However, different entities that may operate or use the document processing environments typically will not want sensitive data to be given to other parties, some of whom may be competitors. Hence, such document processing related data should be readily accessible in real-time, gathered and communicated while maintaining document processing environment anonymity. It may also be desirable for the data to be customizable so as to enable any given document processing environment or interested entity to quickly adapt to or account for growth or efficiency maximization opportunities on the basis of the data.

### Summary

The concepts discussed herein address one or more of the needs and generally provide improved results over the existing art, by providing technology to effectively enable processing of operations data from independent document processing environments to develop a performance metric, in an effective and an anonymous manner.

For example, a method is disclosed for providing a performance metric for document processing operations. The method involves obtaining data pertaining to operations of one or more resources within each of a number of document processing environments, where at least two of the document processing environments are operated by different entities. The data pertaining to the operations of the resources within the document processing environments is populated into a database. The method further entails processing data from the database in accordance with a reporting criteria, to generate at least one anonymous performance metric representing operational performance of resources within at least two of the document processing environments.

In examples discussed in the detailed description below, the operations data that is obtained comprises runtime data regarding the operations of one or more resources within each of the document processing environments and/or metadata associated with runtime data regarding the operations of resource(s). The anonymous performance metric may be a form benchmark data and/or related parameteric data representing the operational performance of the resources within the two or more document processing environments.

Another method disclosed herein provides a user with a performance metric for document processing operations. This method involves receiving from the user a request for document processing performance metric information. A database contains data pertaining to operations of one or more resources within each of a number of document processing environments, wherein at least two of the document processing environments are operated by different entities. The method involves processing data from the database of data in accordance with a reporting criteria, so as to generate at least one anonymous performance metric, corresponding to the requested information. The anonymous performance metric, presented to the user, represents operational performance of resources within two or more of the document processing environments.

In the examples in the detailed description, the user request may include a selection of the reporting criteria from among a variety of different available reporting criteria. In response, the processing produces a user customized anonymous performance metric representing a user selected measure of the operational performance of the resources within the two or more document processing environments. However, to preserve anonymity, the example determines from the user's selection of the reporting criteria whether or not generation of a corresponding performance metric would violate anonymity. The processing step to generate the metric is performed upon determining that generation of the corresponding performance metric would not violate anonymity.

A system implementing such a methodology may also enable comparison of an anonymous performance metric, e.g. a benchmark, to client specific data. For such an implementation, the operations would involve determining whether or not the user is authorized to access client specific information from the database, sufficient to identify at least one of the document processing environments or an entity operating one document processing environment. Upon determining that the user is authorized to access the requested client specific information, client specific data is processed from the database with respect to the one of the environments and/or operating entities corresponding to the requested client specific information, without anonymization. This enables generation of at least one client specific performance metric representing operational performance of one or more resources within the one document processing environment, for presentation to the user for comparison to the anonymous performance metric.

Yet another method disclosed herein presenting to a user, upon request, data pertaining to operations of one or more resources within document processing environments as stored to a database. Here, the database is accessible by the document processing environments and the user, in accordance with an access privilege. At least two of the document processing environments, however, are operated by different entities. This method entails processing data from the database in accordance with a reporting criteria associated with the user request, to generate at least one anonymous performance metric representing operational performance of resources within two or more of the document processing environments. Client specific data from the database also is processed in accordance with the reporting criteria to generate at least one client specific performance metric representing operational performance of one or more resources within an identified document processing environment. The anonymous performance metric and the one client specific performance metric can then be presented to the user.

Those skilled in the art will recognize that the methods and techniques for anonymously sharing data representative of operations and performance of resources employed within the document processing environments may be implemented on computers or other data processing systems, which typically are programmable. Hence, the concepts discussed below may be embodied in computers or other data processing systems as well as in programming used to configure such equipment to implement the relevant data processing.

Additional advantages and novel features will be set forth in part in the description which follows, and in part will become apparent to those skilled in the art upon examination of the following and the accompanying drawings or may be learned by production or operation of the examples. The advantages of the present teachings may be realized and attained by practice or use of various aspects of the methodologies, instrumentalities and combinations set forth in the detailed examples discussed below.

### Brief Description of the Drawings

The drawing figures depict one or more implementations in accord with the present teachings, by way of example only, not by way of limitation. In the figures, like reference numerals refer to the same or similar elements.

FIG. 1 depicts an exemplary system for enabling presentment of performance metric data with respect to a number of independent document processing environments.

FIG. 2 depicts an exemplary resource connectivity module (RCM) for facilitating dynamic interaction with the resources of a given document processing environment.

FIG. 3 depicts the exemplary system of FIG. 1 transmitting one or more categories of performance data relative to a data presentment module.

FIGS. 4a-4d depict screens of an exemplary interface for enabling a user to access meaningful reports and/or data representative of the performance of a number of document processing environments.

FIGS. 5a and 5b are exemplary flowcharts depicting the interactive process engaged in by the system of FIG. 1 with a number of document processing environments and the user.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

The various examples disclosed herein relate to technologies for enabling delivery of real-time, anonymous performance and operations data associated with a number of independent document processing environments to a requesting party, e.g. on demand. Conveyance of operations and performance data, referred to generally herein as operations/performance data, benchmark performance data or performance metrics, may provide the requesting party with enhanced awareness of the performance or relative operating standards of the different document processing environments in present-time operation. Furthermore, the operations/performance data may be representative of the parametric performance of the plurality of resources. Such data may be utilized by the requesting party as a guideline or benchmark from which to gauge the relative effectiveness of their own document processing performance and/or operations.

Examples of the types of performance data or performance metrics that can be generated and conveyed include raw categorical operations and performance information (e.g., number of downtime errors by type, number of years of operator experience and/or level of training, number of reprints performed, job time elapsed, resource cycle time elapsed, idle time, machine run time usage), one or more metrics/calculations/benchmarks/standards (e.g., number of reprints performed per machine type, average sorter or inserter machine downtime for all identical machines sampled, average inserter machine throughput for all inserter types sampled, peak number of document processing jobs performed during a given period), graphs and charts, scorecard information, select reports generated in accord with a specific format, etc.

The performance metrics or operations/performance data as described above may also be conveyed with respect to a given document processing job or work flow configuration-so as to enable a requesting party to gain greater perspective of or context for the various performance information, metrics, graphs, reports, etc. as acquired. For example, while the "throughput capacity" of a particular inserter resource employed within a plurality of document processing environments is valuable information, such operations/performance data has a different meaning when viewed from the perspective of the processing of flat mail items versus single page documents. Likewise, the throughput capacity of said inserter resource takes on a different meaning when said resource is employed within, say a captive mail processing facility versus a letter shop. It will be recognized by those skilled in the art that the examples presented herein enable the processing and conveyance of operations/performance data in varying contexts.

The generation of the performance metric, representing operational performance of resources within at least two of the document processing environments, can use a variety of different types of information collected from the document processing environments pertaining to operations of one or more resources within processing environments. In examples discussed below, the operations data that is obtained for such processing may include runtime data regarding the operations of one or more resources within each of the document processing environments and/or metadata associated with runtime data regarding the operations of resource(s). Indeed, any data pertaining to the operations of one or more resources employed within the differing document processing environments is within the scope of the teachings herein, and as will be seen, may be useful for the generation and conveyance of various performance metrics.

As used herein, "document processing environment" pertains to any arrangement of one or more resources suitable for generating, producing, arranging and managing mail items intended for distribution via a postal authority network, as may be utilized by any postal facility, package delivery operation, mailer or other enterprise, organization or entity that has a need for handling volumes of physical mail articles. Resources employable within a document processing environment may include, but are not limited to, one or more inserter or sorter devices, one or more printers and computing devices, one or more software or process execution systems, one or more human resources, one or more data sources, one or more materials or supplies, etc. More specific examples of resources employable within a document processing environment will be further presented by way of the exemplary figures described in later sections of this description.

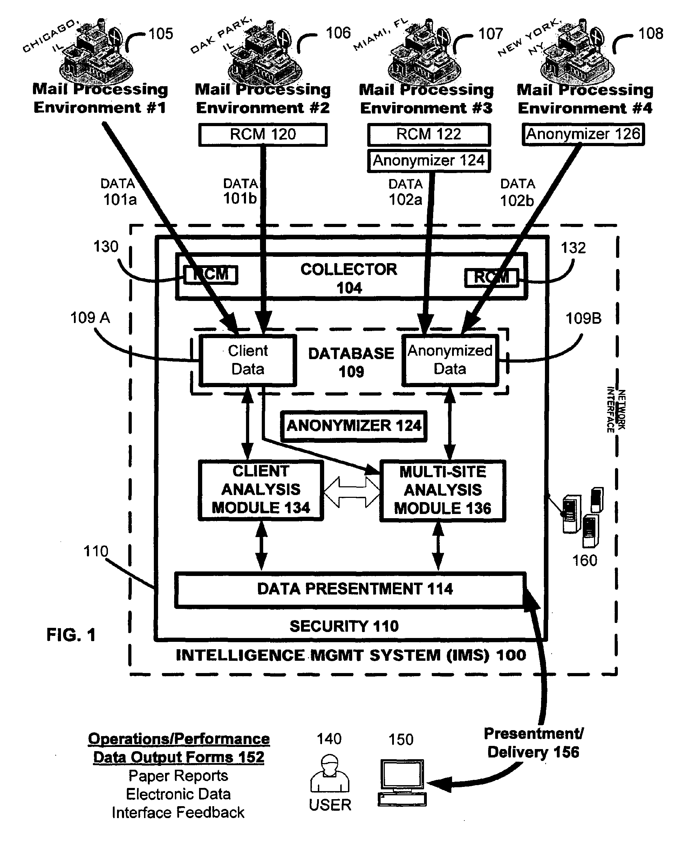

Reference is now made in detail to the examples illustrated in the accompanying drawings, which are discussed below. FIG. 1 depicts an exemplary system for enabling aggregation and processing of data, to enable presentation of operations/performance data with respect to a number of independent document processing environments. In the illustrated arrangement, a database system referred to as an Intelligence Management System, hereafter referred to as the "IMS" 100, collects and processes data pertaining to the resources associated with a number of different document processing environments 105-108. Of particular relevance, the document processing environments in the example are independently operated and run, and therefore have no particular operational association or influence upon one another (e.g., entities operated by different mailers). Each document processing environment in this example operates in a different geographic location, where only environments 105 and 106 share a common state (i.e., Illinois).

Also, each document processing environment supplies data 101a, 101b, 102a and 102b pertaining to operations of its one or more resources as input to a data collection module 104 of the IMS 100. In the example, these data inputs are received by the collection module 104 in a secure manner, such as according to a well-known communication security protocol or technique (e.g., Secure Sockets Layer protocol, data encryption or tokenization, firewall technology); represented in the figure by the security barrier 110 surrounding modules 104, 109, 114, 124, 134, and 136 of IMS 100. Also, while not shown expressly, various security protocols and techniques may be implemented with respect to one or more computing devices 160 of the database system 100. When it detects the presence of data inputs 101a-b and 102a-b, the collection module 104 of the database system 100 executes the appropriate functions for receiving the data transmitted by the resources associated with each document processing environment. The IMS 100, as it will be shown, will process the data upon receipt according to how the data was transmitted in the first place by the contributing document processing environment 105-108.

In particular, the data inputs 101a-b and 102a-b supplied to the IMS 100 as operations data transmitted by the various resources are of at least two types, namely resource data and metadata. As used herein, "resource data" is runtime data, configuration data or any other data that influences or indicates a processing or operational event occurring with respect to a particular resource. Resource data may be one or more data types, generally conveyed in native data form as a resource message conforming to a specific communication protocol. As various resources may operate within a single document processing environment, let alone a substantial number of disparate ones, it stands that various resource data types are also generated. This may include but is not limited to those listed in Table 1 below.

**TABLE 1: Exemplary resource data types as generated by a resource**

| | |
|---|---|
| **Resource data type by processing and/or operational occurrence** | Each data type may have an associated timestamp, resource location, status information, etc. (i.e., metadata) |
| Login/Logout (Operator Name/ID) | |
| Job Start/Stop (Job ID/Name) | |
| Machine Start/Stop (Prod. Time, Machine ID) | |
| Item Completion (Item Count/ID) | |
| Down Code Begin/End (Operator Reason) | |

As alluded to in the table, each data type may further include associated metadata, which is the second data type transmittable by the document processing environments 105-108. The metadata is any information that reveals the semantics, meaning, context, nuances, or connotations of the various resource data types communicated by a particular resource. Hence, metadata may be associated with particular resource data, such as in the form of a data tag or appendage thereof, for revealing additional information relative to the resource data. For example, consider a scenario wherein a machine resource such as an inserter generates a message (e.g., resource message) indicating the launch of a mail job. The message generated by the resource may include data such as a timestamp, a job sequence number, operator data, and other information related to the event. Associated metadata for such an event may include additional comments provided as input by an operator pertaining to the job, such as machine configuration data (e.g., 2-up accumulator processing) or job characteristic data (e.g., glossy duplex paper). This data is valuable to the extent it may be employed as useful parameters for processing data in comparison to reporting criteria, for generating a desired performance metric.

As another example, various metadata may be associated with a particular resource data set in order to provide industry related context information. For example, a presort bureau may 'tag' its job related resource data with industry market data, so as to distinguish one of their client jobs from another. So, a job as performed with respect to an insurance company may be appropriately tagged versus that of a financial services company, or a vertical market may be indicated, or a specific machine configuration or preference may be indicated. Suffice to say, processing of the metadata associated with the resource data enables greater distinctions to be drawn between the resource data types and hence the disparate resources operating within the number of document processing environments 105-108. The metadata may be employed in some instances purely for context, and in others, for enabling greater sifting and analysis of associated resource data. Those skilled in the art will recognize that other types of data besides resource or metadata may also be generated by the various resources, variations depending on the operation performed by each resource or the environment in which the respective resource is employed.

While the supplied data inputs 101a-b and 102a-b are generally of the above described types, how this data is handled upon receipt by the IMS 100 is based on whether the data is pre-processed. By pre-processing, it is meant that the resource data or metadata is operated upon or conditioned prior to IMS 100 receipt to enable anonymization of the data, normalization/standardization of the data, or both. In the context of the examples presented herein, the pre-processing step of "anonymization" refers to the selective process for enabling or maintaining data anonymity, i.e., with respect to any metadata or resource data associated with a particular document processing environment. This type of pre-processing may entail the execution of instructions for identifying and subsequently masking, sanitizing, removing, etc. any identifying data associated with the supplied data inputs 101a-b and 102a-b. Put in another way, anonymization of supplied resource data or metadata refers to the process of (1) identifying any information that by itself, or in combination with other data, is descriptive enough to reveal sensitive or proprietary content/info relative to the document processing environments for which data is being supplied; (2) upon identification, performing one or more techniques for limiting or preventing the visibility and access of such information either to a requesting party or user 140 potentially interested in obtaining operations and performance data, or even the IMS 100.

Anonymization of data may be performed, such as a by a server device or third party application operable in connection with the transmitting document processing environment or associated resource, via the usage of an anonymizer 120 and 122. In other instances, an anonymizer 124 may operate in connection with the IMS 100, such that the supplied data input as stored is stripped of identifying data prior to any processing of the resource or metadata for generation of a performance metric. Still yet, an anonymizer may operate in concurrence with a collection module 104 of the IMS 100, wherein the supplied data input is stripped of any identifying data during collection and prior to placement of the data to a storage medium 109. Of course, as will be seen, the latter scenario need only be considered in instances where a contributing document processing environment wanted to maintain anonymity even with respect to the IMS 100. Regardless of the chosen application, skilled practitioners of the art will recognize that various techniques, tools and software executables for performing data masking, data sanitization, content securitization and other such techniques for maintaining information privacy exist, and may be employed as an anonymizer.

The types of identifying data requiring anonymization may include the resource data in its entirety, or elements and/or bits thereof. Metadata in its entirety, or elements and/or bits thereof, may also require anonymization by the anonymizer 120, 122, or 124. Examples of identifying (ID) data may include, but is not limited to: operator name or ID information, document processing environment or entity name, address or ZIP Code info, machine ID, computer ID, network ID, IP address, domain name server ID, security certificate info, session info (e.g., TCP/IP port settings), Business Entity Identifier (BEI), postage account identifier, time zone info, certain entity demographic info, certain function calls, regular expressions (e.g., alphanumeric strings), etc. As a further example, consider the scenario wherein resource data pertaining to inserter events of document processing environments 105-108 includes specific inserter machine IDs, vendor codes, etc. In this case, the anonymizer 120, 122, 124, whether operating prior to or in conjunction with the IMS 100, would identify such data (e.g., based on a pre-emptive rule base defined by the participating document processing environments or the IMS 100) and strip, replace or mask the machine ID and vendor code information, while remaining intact the other acceptable resource or metadata.

Still further, the other pre-processing step of "normalization/standardization," referred to generally herein as "normalization," refers to the process of normalizing and standardizing the resource data and/or metadata generated by a plurality of disparate resources. More specifically, the normalization and standardization process entails the conditioning of data to enable its effective translation, usage, interpretation, organization and conformation, especially in a multi-resource, multi-site, multi-protocol, distributed data exchange environment as presented in FIG. 1. Those skilled in the art will recognize that various tools, techniques and software executables may be employed as a "normalizer" suitable for performing such data processing.

Although other normalization and standardization elements may be used to condition data accordingly, the example uses a Resource Connectivity Module (RCM) as a normalizer, and tool to seamlessly facilitate dynamic interaction between the resources of a given document processing environment. A particular but not limited implementation the RCM is that of a Web Service communicable via a network. Web Services, also known as application services to those skilled in the art, is a standard way of integrating user applications using the XML, SOAP, WSDL, UDDI and other communication standards over an Internet protocol backbone, such as XML. In general, Web Services facilitate the exchange of business logic, data, commands, etc., in this example, between the one or more servers, computers, devices, software or other resources utilized within a respective document processing environment 105-108 and the IMS 100.

As it relates to the examples herein, the RCM processes the resource data, metadata and other data supplied by the resources of one or more document processing environments, normalizes the data and supplies the data to the IMS 100 for storage to its database 109. After being processed by the RCM, the normalized and standardized version of the resource data and associated metadata is sufficient enough to convey the current state, status, context, type, mode of operation or processing result relative to the plurality of contributing resources. As will be described later, it is through the pointed analysis of such data that performance metrics, or benchmark data pertaining to the operations and performance of the various resources within document processing environments may be generated and provided to a requesting party. For example, computation of the requested data may require usage of various resource data or metadata characteristics as input variables, constraints or criteria by which to compute a specific performance metric or parametric calculation. In general, the requesting party may be any entity associated with the one or more document processing environments and/or any other interested party desiring access to operations/performance data.

As in the case of the anonymizer 120 and 122, the RCM may be executed by a server device or third party application operable in connection with the transmitting document processing environment or associated resource, i.e., RCM 126 and 128. In other instances, the RCM 130/132 may operate upon or in connection with the IMS 100, such that the supplied data input is appropriately normalized to enable effective processing for the generation of operations and performance data. Alternatively, a single RCM may act as an intermediary hosted solution between a number of supplying document processing environments and the IMS 100. Still further, while shown as separate modules, those skilled in the art will recognize that RCM modules 130/132 may be implemented singularly to enable the same benefits. Regardless of the configuration, the RCM 126, 128 and 130/132 interfaces with resources of the document processing environments 105-108 to supply normalized and standardized data related to those resources to the IMS 100.

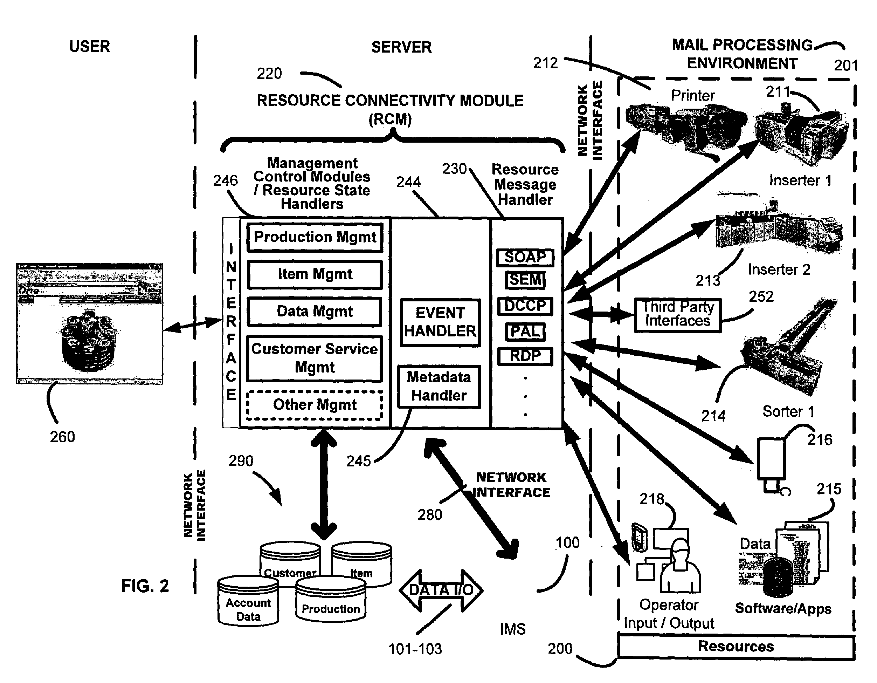

FIG. 2 provides a more detailed example of an RCM in interaction with a document processing environment having one or more resources. The drawing depicts the exemplary system architecture of an RCM, which for purposes of this discussion, may also produce normalized and standardized data for input to the IMS 100. As shown in the example, the functionality of the RCM may be accessed via a browser interface to allow a user to interact with the document processing facility (environment 201), and to provide an easily accessible unitary or integrated interface to carry out programmatically (e.g., via software execution) various management control processes. However, the data processing via the unified interface also provides an effective technique for normalizing the resource and/or metadata as the input to the IMS 100.

The RCM is a protocol and resource independent executable (e.g., a Web Service) that translates the differing message and data formats employed by the various resources 200 of the document processing environment 201 into resource and/or metadata. The executable code representative of the RCM 220 may run on a server maintained locally or accessed remotely by the document processing facility 201. The server computer, upon which the RCM 220 operates, would have network connectivity for communicating with the resources 200 of the document processing facility-i.e., a private/internal network link such as an Intranet or virtual private network (VPN). Also, the RCM 220 may provide access to one or more management control functions 246 that enable a user to perform browser-based resource management control functions (e.g. production management, item management) via a browser 260 on any appropriate data device configured for web type communication with the RCM 220.

The document processing environment 201 for which the RCM may communicate in FIG. 2 corresponds to one of the environments 105-108 shown in FIG. 1. Examples of resources 200 employable within a typical document processing environment 201 are shown in FIG. 2, and may include but are not limited to: one or more inserters such as Inserter 1 211 and Inserter 2 213, one or more sorters such as Sorter 1 214, one or more printers 212, one or more imaging systems 216 (e.g., cameras, readers) and one or more human resources 218. The human resources employable within the document processing environment 201 may include machine operators, service personnel, inventory managers or anyone else that performs any other function in support of operations of the particular environment 201. Depending on the role, the various human resources may communicate relevant data using handheld devices (e.g., barcode readers or electronic maintenance logs), electronic forms capable of being disseminated over a network and any other such tools for recording and transferring information pertaining to the operations or performance of the document processing environment 201.

Various data or computing resources may also be associated with the exemplary document processing environment 201, including one or more network accessible computers (e.g., servers, job processors) for performing specific functional and/or data processing tasks. Tasks performed by these computing resources, operating independently or in a dedicated fashion, may include billing, logistics processing and/or human resources management (e.g., SAP server). Also, one or more computers may perform production processing in relation to a job run by sorter 214 or inserter devices 211 and 213. In addition, various software/data/applications 215 may be utilized by the one or more computers for performing production processing tasks, including but not limited to mail data preparation, machine control, user control applications, process and workflow management and the like. Still yet, one or more third party interfaces 252 may be called upon dynamically by the computing or machine resources for conducting various processing tasks, such as Web services processing (SOAP), XML file data processing, or flat file execution.

Given the number of diverse resources employed, it stands that various activities, operations, tasks, considerations, processes and instructions are executed within the document processing environment 201 relative to the available resources 200. These may include, but are not limited to: address list generation, updating and cleansing; document composition and editing; printstream processing and management; printer control; inserter control and processing; sorter control, processing and sort scheme generation; vision system processing; job tracking; item tracking; error verification; production data recordation; postage payment processing; machine maintenance and performance; user/operator resource allocation; mail distribution tracking; personnel, material and resource allocation; etc. Those skilled in the art will recognize that various other activities, operations, tasks, etc. may occur relative to the number of resources 200 to impact operations of the document processing environment 201. Suffice to say, the machines, systems, tools, data, processes, materials, data, software applications and people-collectively referred to herein as "resources" 200- influence the operations and overall performance of the document processing environment 201.

Various protocols and data formats may be employed by the resources 200, including but not limited to: Remote Desktop Protocol (RDP), Simple Object Access Protocol (SOAP), Simple Explicit Multicast (SEM) Protocol, Protocol Adaption Layer (PAL), Datagram Congestion Control Protocol (DCCP), etc. In addition to encapsulating data pertaining to a resource via the protocol, the messages conveyed may also include various types of metadata, such as a timestamp, a resource location, status information, authentication data, and the like for providing additional context information pertaining to the resource. In particular, the metadata may indicate information which is pertinent to the current state, mode of operation, or status of the resource or associated job or item upon which it is operating. Skilled practitioners will recognize the significance of collecting all of the aforementioned data-including the metadata-especially given the multitude of varying resources and hence data formats that may be utilized. In order to process such data and translate data from disparate data sources into a single dataset maintained by the collection module 104, the data from the respective sources is distinguished, converted if or as necessary and presented uniformly (e.g., in a normalized fashion).

In the illustrated example, the messaging and communication process between the RCM 220 and the one or more resources 200 is depicted by the plurality of bi-directional arrows, such as arrow 221 shown extending from the RCM 220 through an interface (e.g., network, port connection) to Inserter 1 211. The RCM 220 may also interface 280 with one or more external servers or systems, such as the IMS 100 of FIG. 1. Through this interface 280, the RCM may communicate data 101-103 with respect to the one or more resources 200 of the document processing environment 201 to the collection module 104 as resource and/or metadata.

For data received from various resources 200 of the document processing environment 201, the RCM 220 processes relevant resource data and associated metadata into a common form useable for input to and processing by the IMS 100. Essentially, the RCM 220 takes diverse forms of resource data and/or metadata and converts it to a common form of suitable for display via the browser 260, or into a form the IMS 100 can handle in a common manner for all of the different data types. Likewise, the RCMs 126 and 128 shown in FIG. 1 all convert respective resource data and associated metadata into the same common form of resource and/or metadata for the IMS 100. This conversion provides a platform independent mechanism for normalizing events with respect to the resources of the various document processing environments.

Those skilled in the art will recognize that the RCM 220 need not reside in the same physical or network location as the resources 201 themselves, as depicted in FIG. 1. Rather, the RCM may act as a hosted (service provider) or remote solution, or alternatively may be active with respect to the IMS 100. In the latter scenario, the data 101a-b and 102a-b transmitted by the various resources via their respective databases 290 may be received by the IMS 100 in their native data form and subsequently processed by the RCM 220 prior to transmission to the collection module 104.

While not depicted expressly as residing within the document processing environment 201, those skilled in the art will recognize that the one or more computers implementing the web services RCM 220 may interact with or be integrated with the other resources (e.g., primary control computers for sorter 214 or inserter 213). In this case, the plurality of arrows representative of the messaging and communication process may be transmitted to the RCM 220 via the one or more integrated computers. Practitioners of the art will recognize the significance of the exemplary figure as depicting the computer(s) for the web services RCM may operate at the same or a separate location from than the actual facility or facilities of the particular document processing environment 201, which illustrates the site independence afforded by a network based communication scheme. Indeed, the server(s) for the web services RCM 220 and the computer(s) for the databases 290 may be locally or remotely placed relative to the document processing environment 201. Similarly, the browser 200 and browser application 201 may be executed from a computer that is remotely interfaced with the document processing environment 201, such as to enable hosted or remote interaction with the various resources 200. The browser interface may itself access a content database or web server that further regulates the display of content to the browser 260 (e.g., images, banners, messages, pop-ups, etc.).

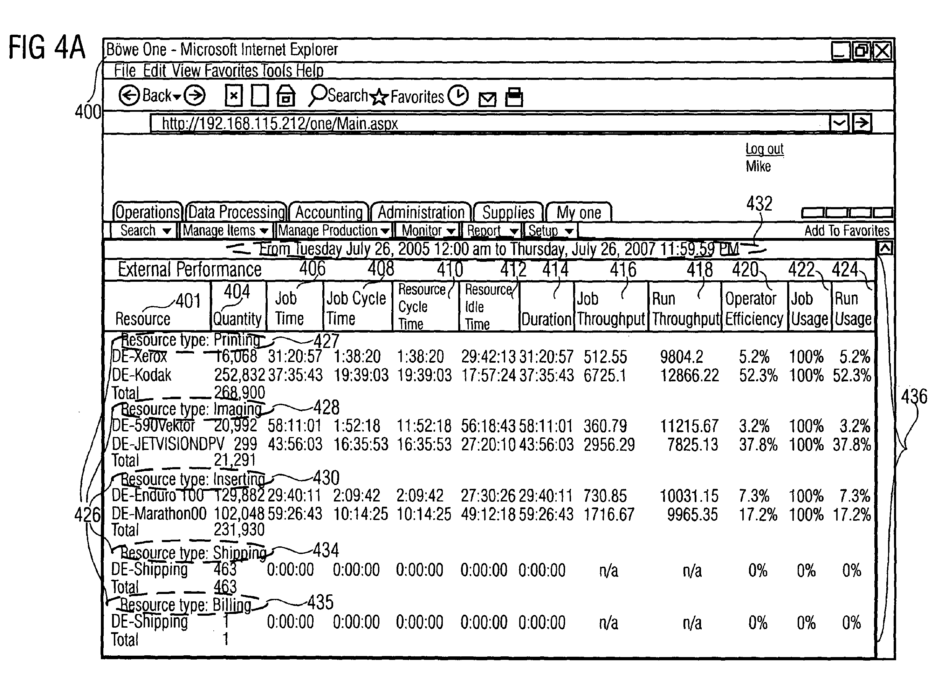

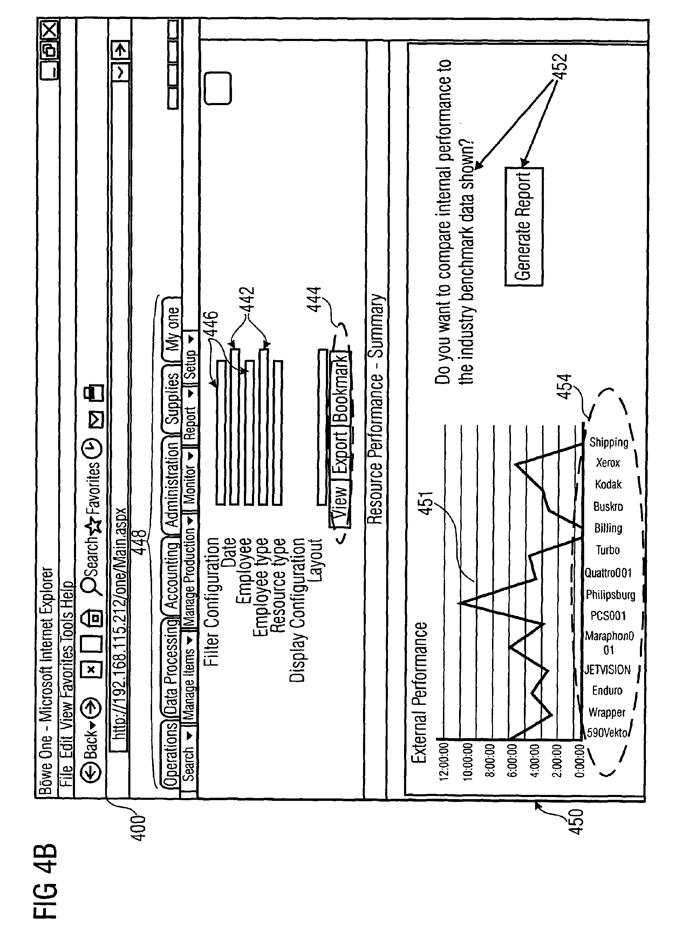

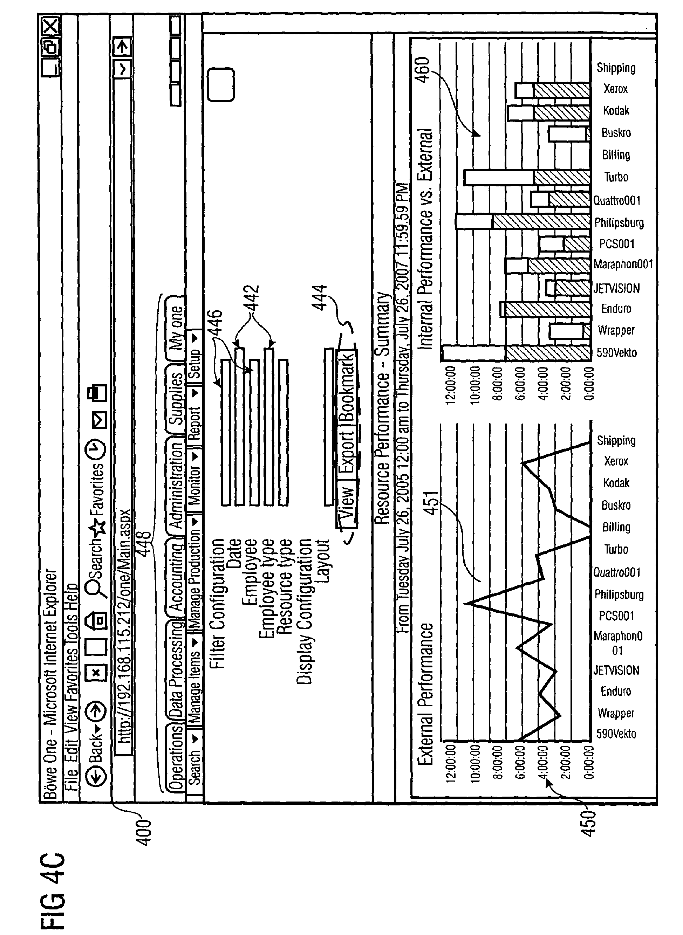

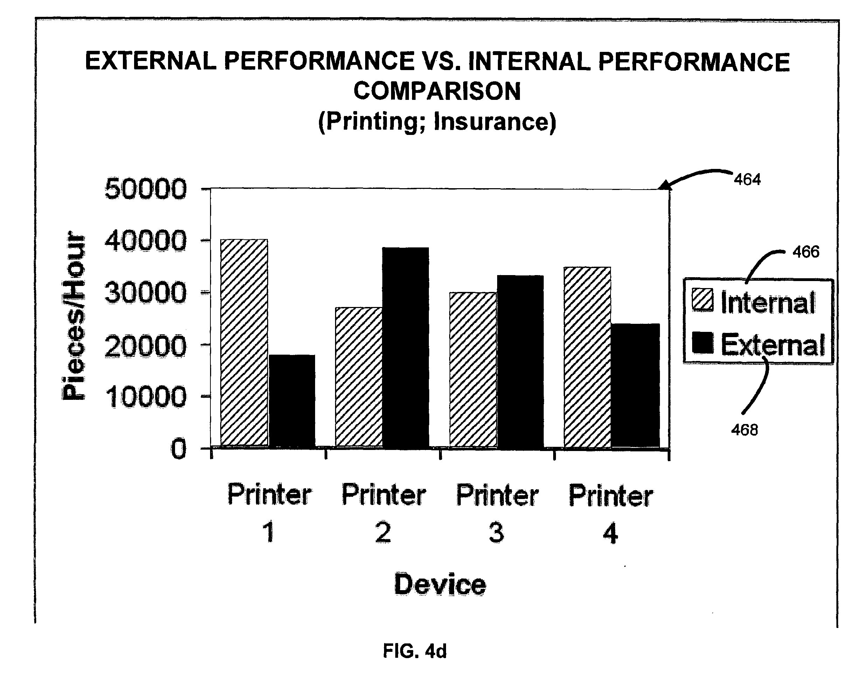

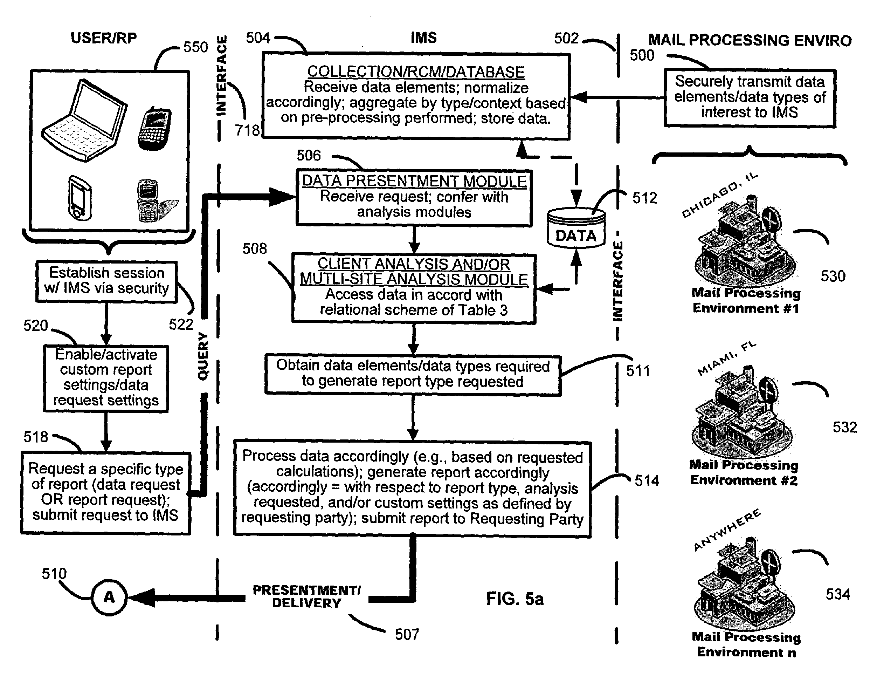

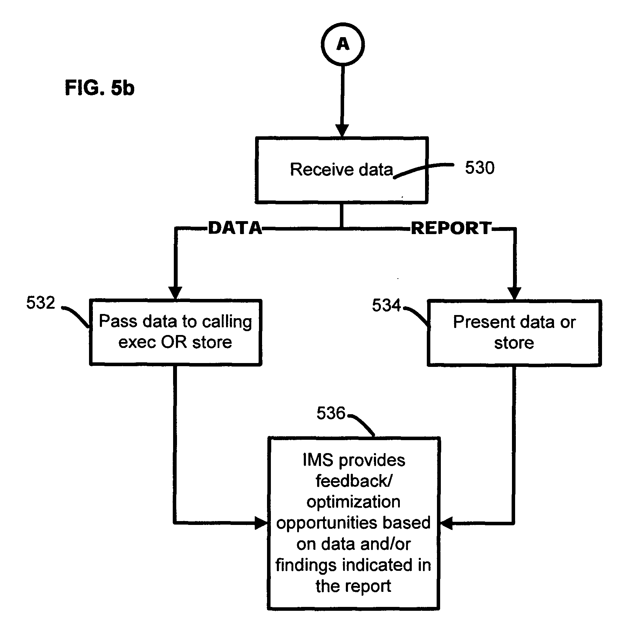

As stated previously, the Resource Connectivity Module (RCM) 220 translates messages received from the one or more resources 200 into its normalized or standardized form. This translation process facilitates and intermediates the communication and interaction between the browser 260 and the resources 200, and the conversion also provides a common resource and/or metadata format for the inputs to the IMS 100. More regarding this aspect of the teachings is presented with respect again to FIG. 4, and with further reference to FIGS. 5 and 6. FIG. 5 depicts a flowchart representative of the interactive and often concurrent processes between the user of the browser application 201, the document processing environment 402, and the Resource Connectivity Module 420.

When messages are received from the one or more resources 200 by the RCM 220, they are initially processed by one of a number of resource message handlers 230. Messages are sent by means of an interface-i.e., hardware or network portal-to a complimentary portal of the resource message handler 230. The resource message handler 230 is an executable component or layer of the RCM 220, for receiving, interpreting and subsequently parsing resource data messages of the type corresponding to one or more protocol handlers, several examples of which are shown in the resource handler section 230 of the RCM 220 in FIG. 2. The one or more protocol handlers are employed for parsing and/or tokenizing the messages as received in their native protocol, where each protocol handler is accessed through a specific portal. Each portal may be implemented as a separate hardware interface or as a logically identifiable port. Hence, for every protocol type employed within the document processing environment 201, there is a corresponding protocol handler and corresponding portal for receipt of messages of such a protocol. However, multiple resources that use a particular protocol all utilize the same portal and protocol handler. This promotes easier device connectivity and interoperability, particularly because no separate protocol handlers need be devised to accommodate every independent resource 200 operable within the document processing environment 201. Instead, the multitude of independently operating devices, machines, processes, people, etc. may be categorized in accord with a specific protocol by which they communicate.

With this in mind, one skilled in the art will recognize that the RCM 220 may be easily adapted to communicate with any resource by simply including a portal and a protocol handler specific to that resource. Moreover, such capability quickly lends itself to adaptability and change management in situations wherein additional resources are employed, particularly where the portals are logically separate processing ports implemented in software.

During parsing, the resource data encapsulated within the various data fields of the message are extracted, compiled and relayed to a second layer or executable component of the RCM 220, referred to as an event handler 244. Likewise, the same is performed respective to additionally tagged or encapsulated metadata by a metadata handler 245. The event handler 244 and metadata handler 245 process the resource data and metadata respectively against various rules to determine ultimately what type of event (i.e., production, item, data or customer service management related function) or metadata type is indicated by the resource and where to send the data. For management control operations, e.g. via the browser 260, the event handler 244 and metadata handler 245 pass the resource and metadata to one or more of several management control modules or resource state handlers in section 246. In a similar fashion, the event handler 244 and metadata handler 245 pass the resource and/or metadata to the appropriate interface to the IMS 100. Pursuant to the interpretation of the resource data or metadata, the event handler 244 and metadata handler 245 also package the resource data into the normalized data format. Rules for performing such functionality may be defined and customized using a configuration file or script executable by the event handler 244 or metadata handler 245. In addition to the above, the configuration file may also define further logic, such as for serializing or queuing data as it is received by the event handler 244 or metadata handler 245.

As an intermediary component, the event handler 244 and metadata handler 245 facilitate the exchange of data between the resource message handlers and the one or more management control modules/state handlers in section 246 as well as to the IMS 100. The event handler 244 and/or metadata handler 246 extracts resource data and/or metadata from a message received by the message handlers for use by the management control modules, and it provides necessary data to the message handlers for transmissions responsive to resource data or metadata from the management control modules. For example, in the upstream direction, the event handler 244 will supply new resource data (e.g. for reporting purposes) from a resource message handler 230, to the interface communicating with the IMS 100. Any metadata associated with the resource data will be passed along accordingly. For management operations via the browser, the event handler 244 provides bi-directional communication between the browser application 201 and the one or more resources of the document processing environment 201.

Given that each protocol resource message handler conveys the same resource data to the event handler, regardless of protocol, only a single configuration file need be required for processing of resource data into normalized form. Likewise, only a single configuration file need be required for processing of metadata into normalized form. Those skilled in the art will recognize that various rules based processing schemes may be employed.

As outlined above, the RCM 126, 128 or 130/132 interfaces with resources of the document processing environments 105-108 to supply normalized and standardized data related to those resources, to the IMS 100 (FIG. 1). Some document processing environments may or may not perform the above described pre-processing steps of normalization/standardization afforded by an RCM, or anonymization as performed by an anonymizer. Consequently, this creates different conditions in which the supply data input may be provided to the IMS 100. Consequently, this also affects how the IMS 100 must respond to the data, particularly as it relates to how the data is to be received and stored, and further, with respect to how operations/performance data is to be accessed pursuant to the data processing. Hence, the IMS 100 must be adaptable to accommodate data transmissions in accord with these differing scenarios. As an example, consider document processing environments 105 and 106, both of which supply data inputs 101a and 101b to the IMS 100 respectively, but not in anonymized fashion. In this case, where no anonymizer is utilized by the transmitting document processing environments 105 and 106, the IMS 100 stores this data to a client database 109a maintained by the IMS 100. The client database 109a maintains resource data and associated metadata that contains one or more identifying data elements useful for generating operations/performance data requiring specific knowledge of a particular entity or requesting party. For example, with appropriate access security restrictions, this data may be leveraged by a specific requesting party also associated with a particular contributing document processing environment to be able to identify their related operations/performance data and compare it relative to performance metrics of other contributing document processing environments (e.g., a comparison of client specific data to benchmark data).

As another example, consider document processing environments 107 and 108, both of which supply anonymized data inputs 101a and 102b respectively, but not in normalized fashion. In this case, where an anonymizer but no normalizer (e.g., as performed by the RCM 126 or 128) is utilized by transmitting document processing environments 107 and 108, the IMS stores this data to an anonymized database 109b. The anonymized database 109b maintains resource data and associated metadata that is devoid of any identifying data elements, and may be useful for generating operations/performance data requiring specific knowledge of the plurality of contributing document processing environments. For example, this data may be leveraged by a particular requesting party for generating user customized performance metrics related to a broad spectrum of document processing environments (e.g., an anonymous performance metric report represented as a benchmark).

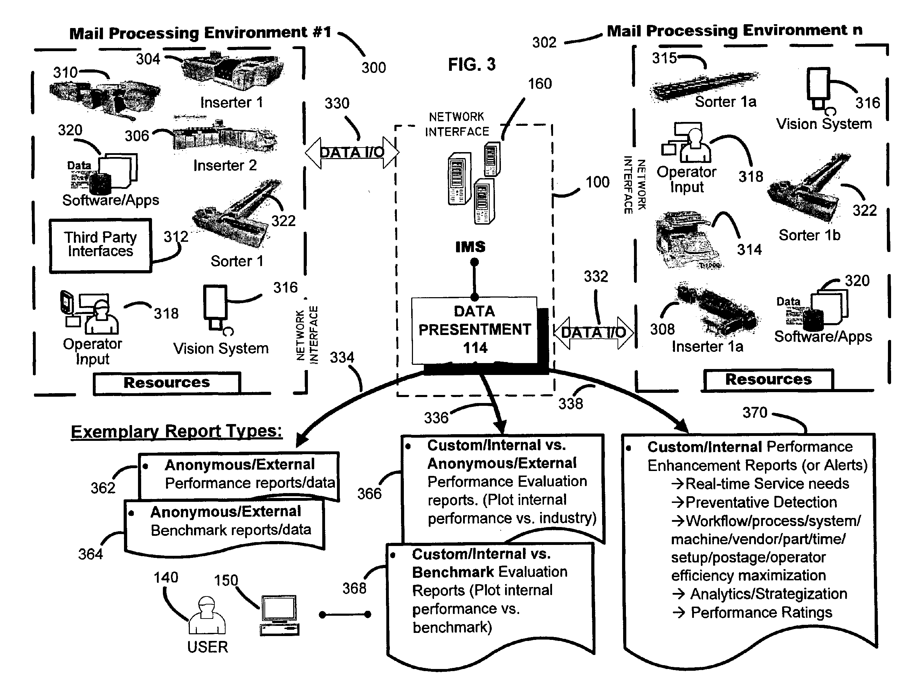

Whether or not the data is anonymized by an anonymizer or normalized by an RCM prior to transmission of the supply data input, the IMS 100 must ensure proper application of its own anonymizer 124 or RCM 130/132 on the supply data input in accord with operations/performance data presentment/delivery options and access privileges. For example, the operations/performance data may be presented or delivered to a requesting party in the form of a user's computing device 150 in differing forms 152. Presentment/delivery of operations/performance data-as performed by a data presentment module 114-to the requesting party 140 is depicted in the figure as arrow 156. The various applicable forms available to meet the requesting party's requirements may include, but are not limited to: a report printable and readable by an application operable by the user's computing device 150 in accord with a particular document convention, electronic data capable of passage or storage to a calling executable or function operable upon the user's computing device 150, or as data suitable for presentment via a graphical user interface operable by the computing device 150. While various forms are available, however, it will be seen that access privilege to the requested data will depend on requesting party 140 relationship to the one or more document processing environments 105-108. Furthermore, the operations/performance data types available to the requesting party 140 will be based in part on whether or not any type of pre-processing is performed by the related document processing environment. More regarding this will be presented with respect to the relationship table outlined in TABLE 2, and further with respect to FIG. 3. For now, further discussion of the internal operations and configuration of the IMS 100 is set forth below.

The IMS 100 is a database system that receives the input data 101a-b and 102a-b from the independent document processing environments 105-108 respectively. In addition, the IMS 100 maintains and manages one or more databases for collecting and storing the input data. From the perspective of the various document processing environments, the database(s) 109a and 109b of the IMS 100 are solely independent of but associated with the operations of the document processing environments 105-108 (e.g., non-proprietary databases). Hence, any resource data, metadata or other data stored to the databases is managed by the IMS 100 as opposed to the contributing document processing environment. The supplied data input 101 a-b and 102a-b is received and compiled by the collection module 104 of the IMS 100 (e.g., in accord with known data warehousing, data mart and/or database management techniques). Where no RCM was applied prior to receipt by the collection module 104-i.e., data input 105 and 108-the collection module 104 may execute an RCM function 130/132 or the like to process this input accordingly. Normalized/standardized supply data input is then stored to at least one of the database(s) 109a or 109b, where the databases are implemented upon a data storage medium (e.g., as a data warehouse) for subsequent retrieval and processing by a client analysis module 134 and/or multi-site analysis module 136.

The client analysis module 134 of the IMS 100 retrieves and arranges the collected resource data and metadata (as stored in database 109a) into operable data sets based on the type of report, data request, calculation or settings demanded by the requesting party 140 via a data presentment module 114. As stated previously with respect to the client data 109a, the data retrieved by the client analysis module 134 is that specific to and indicative of a particular document processing environment, and hence, no anonymizer 124 need process the data. For this reason, the client analysis module 134 need only be employed where data specific to a particular document processing environment is necessary to fulfill operations/performance data requests. On the other hand, the multi-site analysis module 136 retrieves and arranges the collected resource data and metadata (as stored in database 109b) into operable data sets based on the type of report, data request, calculation or settings demanded by the requesting party 140 via the data presentment module 114. As stated previously with respect to the anonymized data 109b, the multi-site analysis module 136 is able to retrieve only anonymized resource and metadata, and is therefore only employed to fulfill operations/performance data requests requiring the analysis of a plurality of the document processing environments. The databases 109a and 109b may be operatively connected or intermediated by the IMS 100 to enable communication between the two, but not necessarily replication of data.

Furthermore, the anonymizer 124 may be employed by the IMS 100 in connection with the client data 109a and multi-site analysis module 136. This is particularly the case in instances where the supply data inputs were not anonymized prior to receipt by the collection module 104, but such anonymization is required for generating comparative operations/performance data. In this case, the comparison is between resource data or metadata for a specific document processing environment from database 109a and anonymous data from database 109b. Particularly, the multi-site analysis module 136 is able to subtract, compensate for or account for variables or data that influence the whole of the anonymized data 109b for the purposes of enabling an accurate comparison. For example, if a request is made by a requesting party via the data presentment module 114 for a comparison of operator efficiency of document processing environment #1 105 against overall document processing environment operator efficiency, the multi-site analysis module subtracts or holds back data for that environment 105 from the overall efficiency computation so as to account for the influence of document processing environment #1 105 upon the overall operator efficiency calculation. Generally, the client analysis module 134 and multi-site analysis module 136 may be operatively connected to enable communication between the two to facilitate processing of requests such as that in the above example. Those skilled in the art will recognize that various communication and security protocols exist for enabling such communication in the context of the examples presented.

As alluded to above, the data presentment module 114 may operate in close connection with the client analysis module 134 and multi-site analysis module 136. Specifically, the data presentment module 114 provides an interface by which a requesting party may establish various analytic parameters (e.g., constraints, query variables, filters) for executing an operations/performance data request. Furthermore, the data presentment module 114 enables the requesting party to define its data presentment/delivery requirements, particularly the category or type of operations/performance data to be presented/delivered and the form 152 in which the data is to be presented/delivered to the requesting party. The data presentment module 114 sends various, anonymously descriptive operations/performance data or reports in response to a user request, depicted in FIG. 1 as arrows 152-156 labeled "presentment/delivery" and depicted in FIG. 3 as arrows 334-338. The use of "presentment/delivery" is intended to convey that the operations/performance data may be (1) presented to the user via an interface, such as browser interface 400 or as a report composed in accord with a given document convention (e.g., PDF format, WORD document), and/or (2) delivered (passed along) as raw operations/performance data not expressly intended for presentment. In the latter case, the operations/performance data is provided as one or more data structures storable by the user/requesting party 140 for subsequent analysis or retrieval, or passed along to another calling application (e.g., object oriented data exchange, seamless data interface) associated with the user/requesting party 140. Those skilled in the art will recognize that any known means of data exchange, delivery and presentment are within the scope of the examples presented herein. More regarding the operation of the data presentment module is presented with respect to FIG. 3.

In particular, FIG. 3 depicts examples of various categories of operations/performance data that may be available for presentment/delivery to a requesting party by the data presentment module 114. The IMS 100 is shown operating in association with independent document processing environment #1 300 and document processing environment n 302. The labeling of document processing environment 302 as n is meant to indicate that a number (n) of various document processing environments may be in communication with the IMS 100, although for convenience additional environments are not shown in the drawing. In particular, the figure depicts the related yet distinct operative nature of the differing environments 300 and 302, which both employ various resources but not necessarily of the exact kind(s). For example, document processing environment #1 300 and n 302 both employ inserter machines 304, 306 and 308 respectively as resources, but of different kinds (e.g., make, manufacturer, operating configuration, style or setup). As another example, document processing environment #1 300 employs an industrial printer 310 and various third party interfaces 312 (e.g., software or hardware interfaces) as part of its operations, while document processing environment n 302 employs a postage meter 314 and unique sorter 315 type. On the other hand, both environments employ one or more operators 318, vision systems 316, software applications 320, and an identical sorter machine 322. However similar or identical certain of the resources within the respective document processing environments may be, why, when, where, how and for whom they are used, configured, defined, adapted, maintained, etc. may differ significantly. Hence, the resource and/or metadata communicated by the document processing environments 300 and 302 may reveal significantly differing perspectives of the performance and operations of the environments, but only to the extent to which the resource data and/or associated metadata 330/332 is effectively analyzed.

The data presentment module 114 provides a means to conduct such analysis, so as to generate operations/performance data relevant to the document processing environments. Operations/performance data may comprise, or is based at least in part, on the analysis and processing of resource data and/or associated metadata 330-332 as generated by the various resources of document processing environments #1 300 and n 302. Analysis and/or processing of such data for the rendering of a purposeful result (i.e., operations/performance data), may include but is not limited to: using various resource data and types as input variables of an equation or query (e.g., six sigma metrics, lean manufacturing calculation, failure modes effect analysis), compare and contrast of various resource data against itself, other data, or one or more rules/standards, standard deviation or regression processing, predictive or preventative outcome analysis, benchmark and/or scorecard tabulation, etc. Operations/performance data may be further generated in accord with a specific resource type (e.g., particular inserter machine or job type), function or context. Indeed, those skilled in the art will recognize that various other operations/performance data not expressed herein may be generated by leveraging the resource and/or metadata.

A requesting party 140 may use a computing device 150 to access the data presentment module's 114 data presentment capabilities via a software interface, such as browser application running on the computing device. In the case of an interface such as browser 400 of FIGS. 4a-4d that is operable over a network like the Internet, the requesting party 140 need not be located in any one location in order to communicate with the IMS 100 via the data presentment module 114. In such an example, the IMS 100 might be accessible over a web-site type access with appropriate security. The requesting party 140 may reside at or be associated with one or more of the document processing environments for which resource and metadata is being sampled or collected by the collection module 104, or at an entirely separate locale without association to a particular document processing environment. Hence, the requesting party 140 need only know how to reach the website through the network and possess the proper permissions and access privileges (e.g., subscriber agreement, security codes) to access operations/performance data. Exemplary access schemes may include, but are not limited to: access by only a requesting party that contributes resource data, paid access by a non-contributing requesting party for the purpose of viewing (perhaps on a limited basis) anonymous operations/performance data, etc.

Various categories or types of operations/performance data may be provided for presentment or delivery depending on the nature of the request from the user/requesting party 140. While operations/performance data could be ascertained for a sole document processing environment based on only its resource and/or metadata, categories that leverage the collectively aggregated resource and metadata data 330 and 332 may include, but are not limited to:

**TABLE 2: Exemplary data categories**

| **Operations/Performance Data Delivery/Presentment Category** | **Purpose/Function** |
|---|---|
| **(A).** External Performance reports/data 362 | Data representative of: **(A)** the operations/performance data with respect to the plurality of document processing environments that provide resource and/or metadata to the IMS, and **(B)** one or more performance metrics as determined from analysis of the operations/performance data relative to the document processing environments. |
| **(B).** External Benchmark reports/data 364 | |
| **(C).** Internal vs. External Performance Evaluation reports/data 366 | Data representative of: **(C)** the operations/performance data relative to the document processing environments that provide resource and/or metadata data to the IMS versus internal operations/performance data, and **(D)** one or more performance metrics as determined from analysis of the operations/performance data relative to the document processing environments versus internal operations/performance data. |
| **(D).** Internal vs. Benchmark Evaluation reports/data 368 | |
| **(E).** Internal Performance Enhancement reports/data 370 | Data representative of: **(E)** one or more means of optimizing internal operations/performance data as determined from analysis of the operations/performance data with respect to the document processing environments. |

Regardless of category, the performance metric data is presented or delivered so as to not disclose any identifying data to any unauthorized party (to maintain anonymity). Even in the instance of operations/performance data 366, 368 and 370 where internal performance data relative to the requesting party may be involved, such reports may be restricted to delivery/presentment to only the requesting party 140 (unless granted otherwise). Alternatively, the user's computing device 150 may operate upon the data in its raw form-i.e., the internal data is provided or imported to the authorized user's computer as one or more data structures-so that they may perform their own subsequent processing. Such would particularly be the case wherein the client analysis module 134 is employed for processing of specific identifying client data 109a.

Anonymous performance metrics such as benchmark data or the like are available to any user 140 having access to the IMS 100. The user may select data processing parameters to obtain a desired subset of the available data, however, control is implemented so that selectivity cannot be used to violate anonymity. A determination is made whether or not generation of the metric would produce sufficiently specific data to identify a particular environment or operating entity. Upon determining that generation of the requested performance metric would not violate anonymity, the metric is generated and delivered to the user. In any case where a particular operations/performance data request would yield a result narrow enough to encroach upon the anonymity of the document processing environments involved, such a result is restricted from delivery or presentment by the data presentment module 114. Rather, a message may be generated by the data presentment module 114 informing the requesting party that the specific analytic variables entered yield unsatisfactory results, or that there are not enough samples to yield the requested operations/performance data.

Also, whether delivered as raw operations/performance data to the requesting party 140 or presented in the form of a report, the requesting party 140 may have the opportunity to customize and filter data according to criteria conforming to their specific requirements. So, for example, while a plethora of operations/performance data may be available the requesting party 140 given proper access privileges, the requestor may wish to filter, select, segregate or dissect certain data so as to acquire only that pertinent to their own needs. Or, as another example, the requesting party 140 may desire presentment and/or delivery of the data in accord with specific compositional requirements, be they visual, textual, organizational, computational, format, etc. Indeed, those skilled in the art will recognize that various methods of data acquisition (e.g., based on data warehousing, data mining, or file processing techniques) as well as presentment may be employed. As a further caveat, presentment of the operations/performance data may also include browser-based mediums, graphical user interface based, object-based, applet-based or other data presentment platforms.

Table 3 below shows the relationship between the document processing environment responsible for supplying a particular data input, the IMS 100, and the category of operations/performance data available. As stated previously, how the data is provided to the IMS-i.e., the nature of the pre-processing performed upon the data prior to receipt by the collection module 104-affects what particular operations/performance data is available to the requesting party.

**TABLE 3: Exemplary Operations/Performance Data Types**

| **Processing Environment** | **The data provided to the IMS by the environment is...** | **Operations/Performance Data Types Available** |
|---|---|---|
| 1 | Not Anonymized or Normalized | 362, 364, 366, 368, 370 |
| 2 | Not Anonymized | 362, 364, 366, 368, 370 |
| 3 | Anonymized & Normalized | 362; 364 |
| 4 | Anonymized | 363; 364 |

When the document processing environment provides data that is not anonymized, as in the case of environments #1 105 and #2 106, all of the categories of operations/performance data as presented in FIG. 3 are capable of being accessed. This is because the supplied data inputs 101a and 101b in this case are passed to the client database 109a for handling by the client analysis module 134 and anonymizer 124-ultimately, enabling the necessary distinctions to be drawn between the anonymous, industry-wide data 109b and the specific, identifying data 109b for which to generate the full gamut of reports 362-370. In contrast, when the document processing environment provides data this is anonymized, as in the case of environments #3 107 and #4 108, only those reports representative of the number of contributing document processing environments may be accessed. This is because the supplied data inputs 102a and 102b in this case are passed to the anonymized client database 109b for handling by the multi-site analysis module 136, where no specific identifying data may be employed for generating reports. Consequently, the multi-site analysis module 136 is limited to compiling data and reports representative of the industry-wide, number of contributing document processing environments.

The dynamics of the relationships presented in the Table 3 assumes that a requesting party seeking to obtain a particular category or type of operations/performance data is itself associated with a particular contributing document processing environment. However, those skilled in the art will recognize that the examples herein are not limited to only those processing and relational dynamics presented by way of the table. Consider, for example, instances wherein the requesting party is not associated with a particular contributing document processing environment. In such a case, the requesting party may be associated with a non-contributing document processing environment, and only want to gain a better understanding of the operations and/or performance of a number of other document processing environments. The requesting party may seek benchmark data for environments similar to the one with which the party is associated and/or similar to a planned upgrade of that environment. As yet a further example, the requesting party may only seek data pertinent to its particular segment of the industry-i.e., financial services related mailers. Such a requesting party would be limited to accessing only anonymized client data 109b, and hence only operations/performance data categories 362 and 364, which for its purposes would be sufficient enough data to provide the requesting party with an industry-wide perspective of sorts.

As stated earlier, the operations/performance data as presented and/or delivered may be based at least in part on the pointed analysis of resource and/or metadata data. Pointed analysis may include quantitative analysis of resource and/or metadata data, such as the number of downtime errors occurrences, number of reprints performed, number of inserters or inserter types, number of sorters or sorter types, number of print jobs performed, number of mail items processed by type, number of manual processing occurrences, number of operators employed or temporal analysis such as job time elapsed, resource cycle time elapsed, idle time elapsed, machine run time usage, pieces per hour, reject rates, maintenance hours elapsed, uptime/downtime, etc. Qualitative analysis may also be performed to allow for further distinctions to be drawn from the myriad of resource data, such as may be obtained from analysis of provided maintenance notes, field instructions, operator comments, metadata, etc. Still further, the analysis may be further performed by resource data type or metadata type, as it is limiting for there to be a finite number data types for the purpose of exposing wide-ranging document processing environment performance. This may include determining the various above mentioned quantitative analytics by type, context, function or category, analyzing the amount of operator experience and/or level of training (e.g., based in enterprise level information), application and job requirements, etc.

Still further, the operations/performance data as presented and/or delivered may be based on computational analysis of resource and/or metadata. This may include usage of one or more of the resource data and/or metadata types, as retrieved by the aggregation module 112, as input variable criteria for computing one or more metrics, benchmarks, or queries.

Table 4 shows just two examples from among the many different operations/performance data types that can be computed by the IMS 100 from leveraging the resource and/or metadata.

**TABLE 4: Exemplary Operations/Performance Data Types**

| **OPERATIONS AND/OR PERFORMANCE DATA TYPE** | **RESOURCE DATA ELEMENTS/TYPES REQUIRED** | **CORRESPONDING RCM MANAGEMENT CONTROL TO PROVIDE REPORT DATA** |
|---|---|---|
| Mail items processed per hour/day/wk/etc. for a mailer, compared to industry averages | □ # of items produced □ # of Hours of job processing performed □ Application details (e.g. # of pages, fold type, inserts, etc.) □ Machine type (e.g. legacy system, booklet maker, flats system, etc.) | □ Prod Management □ Item Management □ Customer Service Management |
| Avg. Machine Downtime per day/wk/hour/etc., compared to industry averages | □ Machine types 0 # of machines □ # of hours of job processing performed (runtime) □ # of hours of downtime □ Down time error types □ Hours of maintenance performed □ Avg. Number of operators per machine | □Prod Management □ Item Management □ Customer Service Management |

The "Mail items processed" metric provides a measure of number of items handled by a mailer for a particular period (hour, day, week, etc.), typically for comparison to similar industry averages. This metric may be used to determine the national/regional average of mail items processed. The report may be juxtaposed against the reviewer's metrics for comparison purposes. Also, a recommendation may be generated to address efficiency lags and/or productivity maximization opportunities. The user can set one or more filter parameters based on similar application or machine type.

The other example of a metric illustrated in Table 4 relates to average machine downtime for a particular period (hour, day, week, etc.), typically for comparison to similar industry averages. This metric may be used to determine the national/regional average of downtime. The report may be juxtaposed against the reviewer's metrics for comparison purposes. Again, a recommendation may be generated to address efficiency lags and/or productivity maximization opportunities.

Further examples of such computational or query based analysis may include determining the number of reprints performed per machine type, the average sorter machine downtime for all identical sorter machines sampled, average inserter machine throughput for all inserter types sampled, peak number of document processing jobs performed during a given period, etc. The requesting party may employ one or more filters, query tools, criteria settings and logical operators for engaging such analysis and querying of the resource and/or metadata. Furthermore, the data may be processed accordingly for graphical representation as one or more graphs, meters or charts, or even comparatively analyzed against baseline performance standards for presentment as scorecard data. Suffice to say, those skilled in the art will recognize that various kinds of analytic computation, business intelligence processing, performance measurement, competitive analysis, forecasting, trend analysis, multi-dimensional analysis and the like may be employed for rendering meaningful operations/performance data. Moreover, skilled practitioners will acknowledge that such analysis, while capable of being performed by the data presentment module 114 based upon data retrieved by the aggregation module 112, may in some instances be pre-performed and stored as resource and/or metadata by the collection module 104.

Hence, the client analysis module 134 and multi-site analysis module 136 fetch, collect and possibly process data with respect to the analysis or report requested by the requesting party via the data presentment module 114, and further organizes the resource and/or metadata in accord with its intended operation. Suffice to say, the client analysis module 134 and multi-site analysis module 136 execute instructions for processing compiled client data 109a and/or anonymized data 109b respectively into meaningful reports or other forms of metrics representative of operational performance of a number of document processing environments. So, for example, if a request is made to determine the benchmark for inserter throughput from amongst the inserters operating across document processing environments 105-107, various types and quantities of resource data and/or associated metadata are retrieved and packaged accordingly for use in generating the response to this benchmark analysis query. This may include, but is not limited to:
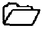 Inserter data
   o Machine characteristics
      □ Machine type; manufacturer; version (M)
   o Software characteristics
      □ Operating system type; manufacturer; version (M)
   o Machine data (e.g., overall, by type)
      □ Machine start/stop time (R)
      □ Number of hours of job processing (R)
      □ Number of mail items processed (R)
   o Maintenance data (e.g., overall, by type)
      □ Downtime error type occurrences
         □ Number of occurrences (R)
         □ Correction time (R)
      □ Operator characteristics
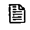 Item data (e.g., overall, by type)
   o Item characteristics
      □ Number of documents produced (R)
      □ Number of pages generated (R)
      □ Number of inserts used (R)
   o Configuration
      □ Number of folds required (M)
      □ Fold locations (M)

      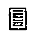 Setup requirements (M)
      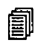 Paper requirements (M)
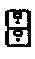 Job data (e.g., overall, by type)
   o Job characteristics
   o Job requirements data

The list above includes the designation of data as either resource data (R) or metadata (M). Of course, those skilled in the art will recognize that the above list is cursory at best, as various other resource data types and/or metadata may be retrieved. Likewise, not all of those items identified as metadata or resource data need be so blatantly one or the other, as the context of application of the data may vary. Also, while not all of the data types shown above are required to accommodate inserter throughput benchmark analysis queries, additional related analysis efforts may require such data. For example, the requesting party 140 may request an analysis of the extent to which a particular machine, item configuration, period of processing, paper fold requirement, etc. impacted the determined inserter throughput benchmark. As alluded to above, the resource data types retrieved may be segregated relative to reporting or analysis needs by specific type (e.g., particular inserter machine or job type), or alternatively, function or context. One way of enabling such segregation in conjunction with the RCM is to filter resource data accordingly using its associated metadata to access that most pertinent to fulfillment of a request. Even further, additional metadata beyond that generated or provided by the contributing resource itself as supplied as input may enable advanced analytic capability. For example, the RCM 126, 128 or 130/132 may assign metadata tags prior to processing by the client analysis 134 or multi-site analysis module 136.

Another exemplary technique for retrieval of resource and/or metadata types by the client analysis 134 or multi-site analysis module 136 relative to a specific report or analysis may be through employment of metadata templates. A metadata template contains or defines information common to multiple datasets. Using one or more metadata templates, the client analysis and/or multi-site analysis module may adapt to and quickly identify commonalities amongst the various data types generated by the contributing resources. In this way, data types may be organized, filtered or grouped in accord with their function, context, syntax, etc. So, for example, an "item template" may define various data types commonly associated with items processed by a machine within the document processing environment, while an "inserter template" may define data types commonly associated with inserter devices (e.g., inserter type, cycle time, throughput). The metadata templates as defined enable the client analysis 134 or multi-site analysis module 136 to coherently and consistently choose amongst and distinguish between the variety of resource and/or metadata available from the database(s) 109a-b.

The client analysis module 134 and/or the multi-site analysis module 136, in responding to the performance metric information request (operations/performance data request) in association with the data presentment module 114 identifies, extracts and packages data from the appropriate database(s) 109a-b using the above described techniques (e.g., metadata templates), or according to other known data extraction, data mining and/or data warehousing techniques. Examples of such techniques may include, but are not limited to, data indexing, relational data extraction, induction algorithm processing, rules or query based mining, hierarchical clustering, on-line analytical processing (OLAP) techniques, statistical analysis, file-based processing, etc. Of course, those skilled in the art will recognize that other data management techniques, models and methodologies exist, and that the example presented herein is not limited to any one implementation.

While resources utilized in one document processing environment 105 may differ from those of another environment 106 or 107, data pertaining to these resources can be associated (e.g., by resource type, function, context) and arranged to convey meaningful performance and operational data. For example, a document processing environment employing a postage meter that generates/transmits information relative to its operations (e.g., postage amount applied, machine start/stop, postage application start/stop time) in its own messaging protocol can be associated-for aggregation into a meaningful report-with a postage meter by a different manufacturer or employing a different messaging protocol. This association of the resources by type, function, context, etc. (e.g., as resource data) enables evaluation of overall performance, in our example, performance of postage meters or postage application equipment and accounting across a multitude of differing protocols and document processing environments be achieved. To the extent a plurality of differing resources operate within differing document processing environments, event occurrences relative to he resources can be effectively normalized (i.e., presented as resource data), by the RCMs in example disclosed, and aggregated and analyzed in the modules of the IMS 100.

Hence, the data presentment module 114 employs the client analysis module 134 and the multi-site analysis module 136 in order to query the aggregated resource and metadata maintained via database(s) 109a-b as collected by the collection module 104. Client analysis module 134 or multi-site analysis module 136 then operates upon the data in accord with instructions, rules, requirements (analytic parameters) established by the data presentment module 114 to generate meaningful reports and/or other forms of metric data representative of at least the operations and performance of the contributing document processing environments. Also, the data presentment module 114 may provide an interface-i.e., a browser-based interface-that enables a requesting party associated with one of the document processing environments and/or some independent user to communicate with the IMS 100. For the sake of clarity, the meaningful information presented to the requesting party by the data presentment module 114 in response to its invocation for the fulfillment of a request, regardless of its form (e.g., raw categorical data, a report of a specific format, benchmark calculation, etc.), is operations/performance data.

The breadth and relevance of the operational/performance data capable of being conveyed to the requesting party increases as the number of document processing environments grows; such that metric data with respect to a particular niche or unique function of the collective document processing environments may be conveyed. For example, if a requesting party were interested in determining the average throughput of inserter type A relative to the document processing environments, such information would be more accurate with a greater sample of data (e.g., more document processing environments and thus more type A inserters) from which to collect and analyze resource and/or metadata. As another example, consider a scenario wherein the requesting party is affiliated with an insurance organization. In such cases, the requesting party may want document processing performance/operations data specific to this particular market or industry; information which becomes more useful and accessible to the requesting party given a larger selection of document processing environment data samples, and particularly, from others enterprises of like kind. Conversely, in instances where the breadth of the operations/performance data is deemed too limiting or narrow, such information may be restricted from presentment/delivery by the data presentment module 114 so as to maintain anonymity with respect to the contributing resources and document processing environments.

Where an opportunity for growth is revealed as a result of determining a particular metric or benchmark based on the performance/operations data (i.e., the aggregation and/or other processing of resource and metadata relative to a plurality of document processing environments), one or more optimization techniques or opportunities may be presented to the requesting party as a way to enhance future performance of that party's document processing environment(s). Such an opportunity would correspond to those requesting party's enabled with the correct access privilege. Moreover, such optimization opportunities would be afforded particularly to those requesting parties associated with document processing environments that provided supply data input not pre-processed by an anonymizer, such as document processing environments #1 105 and #2 106 of FIG. 1. Those skilled in the art will recognize that the unique segmentation of the database 109 for which resource and metadata is stored enables the IMS 100 to readily adapt to differing requesting party needs while maintaining the utmost data anonymity.

In the illustrated example, the security interface 110, the data collection module 104, the client analysis module 134, the multi-site analysis module 136, the data presentment module 114, along with associated RCM 130/132 and anonymizer 124 forming the IMS 100 are implemented as software running on a computer hardware platform, as might typically be used to implement a server (e.g., server cluster 160). Such a device typically runs general server type programming and one or more application programs on top of the server programming, to implement the appropriate functionality, in this case the IMS modules such as shown in FIG. 1. Such a platform typically utilizes general purpose computer hardware to perform its respective server processing and to perform the attendant communications via the network(s) and/or data link(s). The computer 160 operating as the IMS 100, for example includes a data communication interface for packet data communication via the Internet, Intranet or other network(s), for its communications with one or more PCs or other user terminal devices such as 150 for presentment and delivery of analysis and report data outputs. The same or other data interfaces enable communications with the document processing environments 105-107 to receive the resource and/or metadata. The IMS computer platform also includes a central processing unit (CPU), in the form of one or more processors, for executing program instructions. The platform also includes program storage for the general purpose programming and the IMS related programming, and it includes data storage for various data files and databases to be processed and/or communicated in relation to the various functions related to sharing of data representative of the operations and performance of a number of anonymous document processing environments, as outlined above. Of course, those skilled in the art will recognize that the IMS functions may be so implemented on a single server or implemented as a number of instances distributed across some number of computers. The hardware elements operating systems and programming languages of such computer platforms that may run the IMS programming are conventional in nature, and it is presumed that those skilled in the art are adequately familiar therewith.

Reference is now made to exemplary FIG. 4a, which depicts operations/performance data 436 presented as Custom/Internal vs. Benchmark data, corresponding to operations/performance data category 368. The medium of presentment is a browser-based interface, such as that which may be utilized to facilitate network based communications (i.e., Internet, dedicated network). As stated earlier, the client analysis module 134 and the multi-site analysis module 136 retrieve and arrange resource data and metadata accordingly into the operable data sets required to generate operations/performance data 436. In this case, the client data sets retrieved from database 109a are operated upon by the client analysis module 134 to generate the custom/internal operations/performance data. Correspondingly, the anonymized data sets retrieved from database 109b are operated upon by the multi-site analysis module 136 to render operations/performance data representative of a plurality of document processing environment types, organized into specific columns according to a column heading 401. (Plot internal performance vs. benchmark)

Operations/performance data types as conveyed include: resource name 402, quantity of mail items processed by the named resource 404, job processing time elapsed 406, job cycle time 408, resource cycle time 410, idle time 412, duration data 414, job throughput 416, run throughput 418, operator efficiency 420, job usage 422, and run usage 424.

In addition to these categories, the data 436 is further filtered or organized-i.e., at the discretion of the user/requesting party 140 or in accord with established default settings-by resource type category 426. So, for example, for the differing vision systems (e.g., different makes, models or manufacturers) employed by the various contributing independent document processing environments, they are all associated by resource type "IMAGING" 428 and presented as such. Likewise, for the inserting devices, they are all associated by resource type "INSERTING" 430 and presented as such. Even further, the data to be displayed with respect to these operations/performance categories 402-424 and resource types 426 are restricted to a specific time period 432. In this way, the user/requesting party 140 is presented with meaningful operations/performance data relative to the various resources employed, wherein the resources are further categorized by function, type, or context. By organizing by context, function, type, category or the like, it may be understood to those skilled in the art that resource types need not be confined to only depicting machines or people (things), but rather even tasks or activities (e.g., resource types SHIPPING 434 and BILLING 435). To the extent the metadata collected is from a broad range of differing document processing environments, the external performance data 362/436 (category A of Table 2) provides a suitable representation of document processing industry performance; at least in this case with respect to the particular metrics 402-424 chosen for display. Those skilled in the art will recognize that external performance data as shown in FIG. 4 may be recognized by some as one or more benchmark indicators.

In FIGS. 4b-c, another example of operations/performance data is shown. Specifically, FIG 4b depicts a graphical representation of the external operations/performance data presented in FIG. 4a. Again, the data is presented via a browser-based interface 400, where access to the information (resource and metadata) necessary for presentment and/or delivery of operations/performance data is made possible by the multi-site analysis module 136 such as on a client/server communication basis. Hence, via the browser 400, the requesting party may be presented with various data entry fields 442, buttons 444, drop-down menus 446, tabs 448 and other executable controls that enable the requesting party to establish various analytic parameters: run queries, filter data, extract data or request presentment of data in various forms.

In this example, the requesting party is presented with a linear graph 451 representing the measured job cycle time performance 408 in HOURS:MINS:SECS along the y-axis against the various resource types (e.g., inserters, cutters, sorters, vision systems, shipping, billing, operators, etc.) as plotted along the x-axis 454. As in FIG. 1, visibility of the anonymized operations/performance data 450 may be based on appropriate access privilege afforded the requesting party 140 based on security 110 settings or relationship Table 3 above. Hence, the external performance information presented 450 may or may not be adapted to compensate for the influence of the requesting party's operations/performance data.

Assume now that the requesting party 140 is associated with one of the document processing environments 105, 106 and has access to internal data. Hence, in the example, the requesting party is also provided a message 452 indicating the opportunity to compare the external operations/performance data 450-representative of industry or broad sample based job cycle performance benchmarks/metrics-against the performance of their own associated resources. In other words, the requesting party is given the opportunity to generate internal vs. benchmark evaluation operations/performance data 362 (category D of Table 2), wherein their own data may be compared to the broader whole or specific subset thereof. At this time, the requesting party may also define the various formatting or presentment/delivery options required. This may include the definition of measurement scales, graph types, colors, chart titles, and other schemes. Alternatively, other graphical indicators, such as an odometer, thermostat, or other analogous performance measurement may be employed.

Activation of the "GENERATE REPORT" button 452 via the user interface indicates the requesting party's desire to exercise this option. When exercised, the data presentment module 114 calls upon both the client analysis module 134 and multi-site analysis module 136 to gather the necessary resource and or metadata pertinent to the request. Once retrieved, the modules process the data accordingly to generate the comparative analysis result desired. In the present example, the result as shown in FIG. 4c is operations/performance data organized as a bar graph 460 depicting the juxtaposition of the requesting party's internal operations/performance data against calculated benchmark data.

In FIG. 4d, yet another exemplary format which the operational/performance data may be presented is shown. In particular, depicted is a side-by-side comparative bar graph 464 representative of a contributing document processing environments internal printer throughput 466 (in pieces per hour) vs. benchmark printer throughput data 468 (category D of Table 2). Four different types of printers operate within the document processing environment associated with the requesting party, referred to as Printers 1-4. Also as shown, the bar graph 464 is limited to only those printers associated with the insurance niche within the document processing industry, a preference or setting established by the requesting party in advance of any processing of the data by the client analysis module 134 or multi-side analysis module 136.

In generating the output 464, the data presentment module 114 must confer with the client analysis module 134 and multi-side analysis module 136, which in turn identify and retrieve and process the necessary resource data and metadata from the database 109 as required relative to only the specified printer types. The resource data retrieved may include aggregated piece count information, print time data, etc., while metadata indicative of the desired niche/industry may be used for refined searching of the resource data relative to the insurance industry. Assuming enough examples exist for generating the determined benchmark computation for each printer, the bar graph 464 may then be presented via a user interface.

As shown, Printer 1 and 4 of the document processing environment associated with the requesting party are shown to outperform the benchmark, while Printer 2 and 3 are shown to under perform the respective benchmark for this particular industry. Such a perspective enables a user to easily evaluate their own printer throughput performance versus the general industry on a per machine basis. It will be noted by those skilled in the art that the performance metric calculation in this example, represented by the solid bar graphs, is based on a single fixed number being indicative of the benchmark. This may be computed on the basis of an average throughput, mean throughput or standard throughput as determined for a plurality of samples of Printers 1-2. Those skilled in the art will recognize that the present examples herein are not limited to any particular depiction of the benchmark. Rather, different application requirements and data presentment needs may be accommodated by the data presentment module in enabling benchmark comparative analysis. Suffice to say, the aggregation of data relative to a plurality of contrasting resources, but associable by type, function or context, enables the calculation of such metrics for presentment and/or delivery as meaningful operations/performance data 450, 460 and 464.

While not shown in FIGS. 4a-4d, as stated, various optimization opportunities may be presented by the data presentment module 114 to the requesting party based on further analysis. For example, the client analysis module 134 and multi-site analysis module 136 function may perform trend analysis upon its respective data sets. As such, the modules may identify trends with certain machine types of a certain age that show preventative maintenance on common problems during off hours can significantly reduce the impact to a production mail center associated with a requesting party. In keeping with this example, if a flats machine is identified to need a new part X after every Y number of pieces or Z number of run-time hours, then the requesting party associated with the document processing environment operating such a machine can schedule a replacement of the part before it breaks. As a result, that party's flats machine can be serviced during off-production hours so as to not inhibit run-time performance.

As another example, the trend analysis may identify that operators with less than X hours on a particular machine type with a particular application type need a second operator to work with them in order to achieve Y productivity. As yet another example, it may be possible to track machine productivity with, and without, a postage meter to show mailers how much productivity on average they are losing because of postage meter jams. Ultimately, the broad array of anonymous client data 109b may be suitably leveraged against any client data 109a to generate meaningful operations/performance data.

In the examples presented, each performance data output corresponds to an instance wherein a requesting party 140 communicates with the data presentment module 114 to request presentment of the data via the browser 400. Of course, those skilled in the art will recognize that the requesting party 140 may call for the data indirectly (e.g., calling routine, executable, or interface). Although in some cases the requesting party may be an individual, person or organization, those skilled in the art will recognize that a requesting party may be a software executable, computer or other type of data processing device such as a PDA, cell phone or tablet PC. Even still, in instances where the requesting party is a software executable (e.g., the executable performing a function call for access and retrieval of the operations/performance data), computer or other type of data processing device, the requesting party may be associated with a particular user. The user may further be associated with at least one of the document processing environments in communication with the IMS 100. Regardless of the type of entity, the requesting party need only have the correct access privileges and security clearance rights. Those skilled in the art will recognize that the exemplary method and systems presented herein are not limited to any particular relational arrangement or transactional agreement.

Reference is now made to exemplary flowcharts of FIGS. 5a and 5b, which together depict the interactive process engaged in by the IMS 100 with a plurality of document processing environments 530-534 and a requesting party in the form of a terminal device 550 (several examples of which are shown in FIG. 5a). In the context of the examples presented herein, those skilled in the art will recognize that the interactive process herein is suitable particularly for real-time transactional processing, as well as various measures of controlled or delayed transactional processing. Furthermore, is will be recognized by skilled practitioners that the procedures depicted herein need not be limited to sequential execution, but may in some instances be performed concurrently. As the document processing environments convey resource and/or metadata (event 500) via a secure interface or connection, this data is received and processed by an RCM or the like operating in connection with the collection module 104 as to normalize data received by the collection module 104. The normalized version of the data is then stored by the collection module 104 to either the client database 109a or anonymized client database 109b such as in accord with known data warehouse conventions and techniques.

A user of a terminal device 550, the requesting party, having established the appropriate access privileges necessary for communication with the IMS 100 (event 522), may further (and optionally) define the scope and nature of the operations/performance data which they seek (event 520). As stated above, this may include various specifications, such as establishing settings that dictate how the operations/performance data is presented and/or delivered. This may also include the definition of measurement scales, graph types, colors, chart titles, and other graphical and textual schemes. Still further, the user/requesting party at this point may also indicate to the data presentment module the category or mode of presentment/delivery of the operations/performance data, along with the specific data types, queries, calculations, benchmarks, etc. of interest. This may include, but is not limited to, exemplary categories 362-370 as presented with respect to Table 2. All of these tasks may be performed via an interface provided by the data presentment module 114, with various interface controls and executables usable by the user/requesting party of a terminal device 550 (e.g., browser-based interface 400).

Once the specifications are defined, the requesting party 550 may submit their request for access to operations/performance data to the data presentment module 114 of the IMS 100 (event 518). Upon receipt (event 506), the data presentment module 114 determines, based on the user/requesting party's defined preferences (event 520), how the operations/performance data is to be presented/delivered. More importantly, the data presentment module 114 confers with the client analysis module 134 and/or the multi-site analysis module 136 to access a particular database 109a or 109b at 512 in order to fulfill the request based on the relational dynamics described above in Table 3 (event 508).

The analysis modules retrieve and arrange the collected resource and metadata as stored 512 into operable data sets applicable to the specifications of the requesting party 550. Like resource types, functions, or contexts may be retrieved and arranged accordingly as one or more data structures (event 511). At this point, the client analysis module 134 may perform operations upon client data 109a, while the multi-site analysis module 136 performs analysis on anonymized data 109b as required by requesting party 550 specifications (event 514). For example, the requesting party 550 may have indicated operations/performance data representative of the ratio of maintenance cycle time elapsed to operator years of experience by resource type (i.e., inserter, sorter, server, software), in which case the multi-site analysis module 136 may process the resource and metadata representative of the industry to generate such benchmark data. Further processing may be performed to generate the data in a manner consistent with a particular form, be it paper, electronic or interface based feedback.

Using the appropriate resource and/or metadata as input variables, one or more metrics/benchmarks/standards may be computed, graphs and charts composed, scorecard information may be determined, or reports may be generated in accord with a specified file convention or data format. In the case of a report request, those skilled in the art will recognize that a report need not be a format intended for hardcopy form, but rather, may be a flat file, ASCII file, XML file or the like. Whether to be presented as a custom report or via an interface, the data presentment module 114 sends the operations/performance data to the terminal 550 of the requesting party/user (event 507). While not shown in the flowchart, instances wherein a particular operations/performance data request generates results not suitable for maintaining anonymity of data, results may not be delivered or presented.

Upon receipt (FIG. 5b, event 530), the requesting party 550 may access the operations/performance data in accord with their specifications. Access to the data will vary depending on the form requested. For example, if received as one or more data structures, the terminal device 550 may store this data to a storage medium or pass it along to a calling executable (e.g., object oriented data exchange, seamless data interface) (event 532). If received as a report, this report may be stored for later perusal by the user/requesting party, or presented by way of an interface (event 534).

As a final optional step, the data presentment module 114 may present one or more optimization recommendations or operations/performance improvement opportunities to the requesting party relative to the operations/performance data provided (event 536). An example of such an opportunity is presented with respect to message 452 as rendered via the user interface 400 of FIG. 4b. Optimization recommendations may include, but are not limited to, recommended maintenance, supply or resource needs, preventative maintenance detection, workflow/process/system/adjustment recommendations, machine/vendor/scheduling and time efficiency opportunities, postage savings opportunities, optimal setup recommendations, business and operational analytics and strategy recommendations, ISO compliance recommendations, Six Sigma optimization, performance rating increase opportunities, etc. In providing such recommendations or opportunities, such as shown with respect to graph 460 in FIG. 4c, the data presentment module 114 leverages its broad collection of industry resource and/or metadata to cater to the specifications, needs, or profile (historical or present day) of the requesting party. In this way, the data presentment module 114 operating in conjunction with the analysis modules 134 and 136 may generate relevant recommendations readily adaptable to the specific needs of the requesting party.

While various advantages and benefits associated with the method and system as presented herein has already been stated, those skilled in the art will further recognize others. For example, it will be appreciated that the reporting and analysis capability afforded by the IMS 100 may be performed in a customized fashion, so at to suit the specific analytic or presentment needs of the requesting party 140. Furthermore, it will be appreciated that the IMS 100 enables a document processing environments to effectively populate a database of machine (i.e., computers, sorters) and process related data (along with other data types); wherein the database is not expressly owned, maintained or managed by the respective document processing environment itself. Hence, the IMS acts as a central, non-proprietary source of secure, normalized data relevant to the document processing environment, which in the context of the examples herein may be leveraged for data presentment purposes (e.g., performance metric computation) against similar data maintained for other document processing environments.

The term "database" as used herein with respect to the IMS 100 is meant to apply to any system, source or type of electronic data that is searchable or accessible by one or more computers and/or computer executables, and is not intended to be limited by the actual hardware or software implementation. Databases may be implemented in centralized or distributed fashion (e.g., as a collection of one or more server systems 160) in accord with various models and design methodologies for achieving varying operational and functional purposes. Furthermore, databases may be managed by a management system, such as IMS 100, wherein various hardware, software and network system configurations may be employed. Storage mediums upon which a database may be implemented or maintained may include, but is not limited to, disk storage such as DASD, RAID, or other mediums of varying volatility. The database may be implemented upon such mediums in accord with varying database file structures, languages or methodologies, including but not limited to Structured Query Language (SQL), Extensible Markup Language (XML), ordered/unordered flat files, Indexed Sequential Access Method (ISAM), heaps, hash buckets or Quaternary trees (B+ Trees). Those skilled in the art will select the combination of hardware and software according to the database.

Although the discussion above has focused largely on the methodologies, those skilled in the art will recognize that those methodologies may be embodied in specific equipment, systems or devices. Also, many of the operations described above may be carried out by processing and/or associated execution of software, firmware, or microcode operating on processors or computers of any type used to provided the functionalities of the servers, client devices and/or programmed control for the various manufacturing (document processing) elements shown in the system drawings. Additionally, code for implementing such operations may be in the form of computer instruction in any form (e.g. source code, object code, interpreted code etc.) stored in or carried by any computer or machine readable medium.

Program aspects of the technology may be thought of as "products" typically in the form of executable code and/or associated data that is carried on or embodied in a type of machine readable medium. Storage media include any or all of the memory of the computers processors or the like, or associated modules thereof, such as various semiconductor memories tape drives, disk drives and the like, which may provide storage at any time for the software programming. All or portions of the software may at times be communicated through the Internet or various other telecommunication networks. Such communications, for example may enable loading of the software from one computer or processor into another. Thus another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software.

Terms regarding computer or machine "readable medium" (or media) as used herein therefore relate to any storage medium or transmission medium that participates in providing instructions or code or data (e.g. license records or license related information) to a processor for execution or processing. Such a medium may take many forms, including but not limited to, non-volatile storage media and volatile storage media as well as carrier wave and physical transmission media.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

## Claims

1. A method of providing a performance metric for document processing operations, comprising steps of:
obtaining (504) data (101a, 101b, 102a, 102b, 101-103, 330, 332) pertaining to operations of one or more resources (211-218, 304-320) within each of a plurality of document processing environments (105-108, 201, 301, 302), at least two of the document processing environments (105-108, 201, 301, 302) being operated by different entities;
populating (504) the data (101a, 101b, 102a, 102b, 101-103, 330, 332) pertaining to the operations of the resources (211-218, 304-320) within the document processing environments (105-108, 201, 301, 302) into a database (109); and
processing (514) data (109A, 109B) from the database (109) in accordance with a reporting criteria to generate at least one anonymous performance metric (362, 364) representing operational performance of resources (211-218, 304-320) within the at least two document processing environments (105-108, 201, 301, 302).

2. The method of claim 1, wherein:
the step of obtaining comprises collecting client specific data (102a, 102b) from at least one of the document processing environments (105-108, 201, 301, 302) containing data sufficient to identify a respective document processing environment or an entity operating the respective document processing environment;
the step of populating populates the client specific data (109A) into a client database (109); and
the step of processing comprises anonymizing (124) client specific data (109A) from the client database (109) and processing the anonymized data to generate the at least one performance metric (362, 364).

3. The method of claim 2, further comprising processing client specific data (109A) from the client database (109) in accordance with the reporting criteria without anonymization to generate at least one client specific performance metric (370) representing operational performance of one or more resources (211-218, 304-320) within a respective document processing environment for comparison (366, 368) to the at least one anonymous performance metric (362, 364).

4. The method of claim 1, wherein:
the step of obtaining comprises collecting anonymous data (102a, 102b) from at least one of the document processing environments (105-108, 201, 301, 302);
the step of populating populates the anonymous data (109B) into the database (109); and
the step of processing comprises processing anonymous data (109B) from the database (109) to generate the at least one performance metric (362, 364).

5. The method of claim 1, wherein the data pertaining to operations of one or more resources (211-218, 304-320) within each of the plurality of document processing environments (105-108, 201, 301, 302) is normalized before the populating thereof into the database (109).

6. The method of claim 1, wherein the data pertaining to operations comprises runtime data regarding the operations of one or more resources (211-218, 304-320) within each of the document processing environments (105-108, 201, 301, 302).

7. The method of claim 7, wherein:
the data pertaining to operations further comprises metadata associated with the runtime data regarding the operations of one or more resources (211-218, 304-320) within each of the document processing environments (105-108, 201, 301, 302): and
the processing of data from the database (109) in accordance with the reporting criteria comprises filtering data from the database (109) based on a criteria of the metadata.

8. The method of claim 1, wherein the at least one anonymous performance metric (362, 364) comprises benchmark data (364) and related parametric data representing the operational performance of the resources (211-218, 304-320) within the two or more document processing environments (105-108, 201, 301, 302).

9. The method of any of claims 1 to 8, wherein the step of processing is responsive to receipt of a user request (518) for the at least one anonymous performance metric (362, 364).

10. The method of any of claims 1 to 8, further comprising steps of:
receiving from the user (140) a request (518) for document processing performance metric information; and
presenting (507) the anonymous performance metric (362, 364) to the user.

11. The method of claim 10, further comprising:
receiving user identification information; and
based on the user identification information, determining whether the user (140) is authorized to access the database (109).

12. The method of claim 11, further comprising:
based on the user identification information, determining whether or not the user (140) is authorized to access client specific information from the database (109), the client specific information sufficient to identify at least one of the document processing environments (105-108, 201, 301, 302) or an entity operating the at least one document processing environment;
upon determining that the user (140) is authorized to access the requested client specific information, processing client specific data (109A) from the database (109) with respect to the one of the environments (105-108, 201, 301, 302) and/or operating entities corresponding to the requested client specific information, without anonymization, to generate at least one client specific performance metric (370) representing operational performance of one or more resources (211-218, 304-320) within the one document processing environment; and
presenting the at least one client specific performance metric (370) to the user (140) for comparison (366, 368) to the at least one anonymous performance metric (362, 364).

13. The method of claim 10, wherein the user request (518) includes a selection of the reporting criteria from among a variety of different available reporting criteria so that the processing produces a user customized anonymous performance metric (362, 364) representing a user selected measure of the operational performance of the resources (211-218, 304-320) within the two or more document processing environments (105-108, 201, 301, 302).

14. The method of claim 13, further comprising:
determining responsive to the selection of the reporting criteria included in the request whether or not generation of a corresponding performance metric (362, 364) would violate anonymity;
wherein the processing step is performed responsive to a determination that generation of the corresponding performance metric (362, 364) would not violate anonymity.

15. A product comprising a machine readable medium and programming instructions embodied in the medium, wherein execution of the instructions by a programmable device causes the device to perform the method of one of claims 1 to 14.
